# EUROPEAN PATENT APPLICATION

(11) **EP 4 566 930 A1**
(43) Date of publication of application: **11.06.2025**
(21) Application number: 23849936.2
(22) Date of filing: 24.07.2023
(51) Int. Cl.: B62M 6/65, B62M 11/16

(54) **ELECTRIC POWER ASSIST UNIT FOR BICYCLE, AND ELECTRIC POWER ASSISTED BICYCLE**

(30) Priority: 05.08.2022 JP 2022125755
(71) Applicant: Jatco Ltd., Shizuoka 417-8585 (JP)
(72) Inventor: SUGAYA, Shouji, Fuji-shi, Shizuoka 417-8585 (JP); ITO, Tetsuro, Fuji-shi, Shizuoka 417-8585 (JP); OKAMOTO, Toshiyuki, Fuji-shi, Shizuoka 417-8585 (JP); YAMAGUCHI, Toshio, Fuji-shi, Shizuoka 417-0002 (JP)
(74) Representative: Hoefer & Partner Patentanwälte mbB
(86) International application number: PCT/JP2023/026952
(87) International publication number: WO 2024/029381

(57) **Abstract**

[PROBLEMS] To achieve miniaturization of an electric power assist unit for a bicycle.

[SOLUTIONS] An electric power assist unit includes a plurality of sun gears each having a different number of teeth and configured to selectively receive a pedaling force from a rider; a first planetary gear having a tooth flank meshed with each of the plurality of sun gears; an electric motor configured to generate a drive force for assisting the pedaling force; a sun gear different from the plurality of sun gears and configured to receive the drive force from the electric motor; a second planetary gear configured to revolve and rotate integrally with the first planetary gear and meshed with the sun gear different from the plurality of sun gears; a ring gear non-rotatably provided in and meshed with the second planetary gear; a carrier supporting the first planetary gear and the second planetary gear; and a case connected to the carrier and configured to transmit at least one of the pedaling force or the drive force to a drive wheel.

## Description

### TECHNICAL FIELD

The present invention relates to an electric power assist unit for a bicycle and an electric power-assisted bicycle.

### BACKGROUND ART

Patent Document 1 discloses a bicycle hub unit including a drive motor that generates a drive force, a transmission mechanism portion that transmits a manual drive force to a hub case (case), and a deceleration mechanism portion that transmits the drive force of the drive motor to the hub case.

### PRIOR ART DOCUMENT

### PATENT DOCUMENT

Patent Document 1: JP2013-039865A

### SUMMARY OF INVENTION

### PROBLEM TO BE SOLVED BY THE INVENTION

Incidentally, in an electric power-assisted bicycle, many components such as a battery and an electric power assist unit are required as compared with a normal bicycle, and thus there is a need for further miniaturization of the electric power assist unit.

However, in the hub unit according to Patent Document 1, the transmission mechanism portion includes a transmission sun gear (sun gear), a transmission planetary gear (planetary gear), a transmission planetary carrier (carrier), and a transmission outer ring gear (ring gear), and the manual drive force is input to the transmission outer ring gear, and the transmission planetary carrier outputs the drive force to the hub case. Further, the deceleration mechanism portion includes a decelerator sun gear, a decelerator planetary gear, and a decelerator outer ring gear, the decelerator planetary gear meshes with the decelerator outer ring gear, and the transmission planetary carrier holding the decelerator planetary gear outputs the drive force to the hub case. As described above, in the hub unit according to Patent Document 1, the sun gear, the planetary gear, and the outer ring gear are provided in each of the transmission mechanism portion and the deceleration mechanism portion, and thus the hub unit is complicated in structure and is difficult to miniaturize.

The present invention has been made in view of the above problem, and an object of the present invention is to achieve miniaturization of an electric power assist unit.

### MEANS FOR SOLVING THE PROBLEM

According to an aspect of the present invention, an electric power assist unit for a bicycle includes a plurality of sun gears each having a different number of teeth and configured to selectively receive a pedaling force from a rider; a first planetary gear having a tooth flank meshed with each of the plurality of sun gears; an electric motor configured to generate a drive force for assisting the pedaling force; a sun gear different from the plurality of sun gears and configured to receive the drive force from the electric motor; a second planetary gear configured to revolve and rotate integrally with the first planetary gear and meshed with the sun gear different from the plurality of sun gears; a ring gear non-rotatably provided in and meshed with the second planetary gear; a carrier configured to support the first planetary gear and the second planetary gear; and a case connected to the carrier and configured to transmit at least one of the pedaling force or the drive force to a drive wheel.

### EFFECT OF THE INVENTION

According to the aspect of the present invention, the single ring gear, which is non-rotatably provided in and is meshed with the second planetary gear that revolves and rotates integrally with the first planetary gear, is provided. Thus, it is not necessary to provide a ring gear in each of a deceleration mechanism portion that transmits the pedaling force from the rider and a transmission mechanism portion that transmits the drive force from the electric motor. Therefore, it is possible to achieve miniaturization of the electric power assist unit.

### BRIEF DESCRIPTION OF DRAWINGS

[FIG. 1] FIG. 1 is a side view illustrating an overview of an electric power assist unit for a bicycle and an electric power-assisted bicycle according to an embodiment of the present invention.
[FIG. 2A] FIG. 2A is a configuration diagram of the electric power assist unit.
[FIG. 2B] FIG. 2B is a configuration diagram of the electric power assist unit according to a modification.
[FIG. 3A] FIG. 3A is an alignment chart of the electric power assist unit, and is a diagram showing a state in which a gear position is switched to a first position.
[FIG. 3B] FIG. 3B is an alignment chart of the electric power assist unit, and is a diagram showing a state in which the gear position is switched to a second position.
[FIG. 3C] FIG. 3C is an alignment chart of the electric power assist unit, and is a diagram showing a state in which the gear position is switched to a third position.
[FIG. 4] FIG. 4 is a cross-sectional view of the electric power assist unit, and is a diagram showing the state in which the gear position is switched to the first position.
[FIG. 5] FIG. 5 is a cross-sectional view of the electric power assist unit, and is a diagram showing the state in which the gear position is switched to the second position.
[FIG. 6] FIG. 6 is a cross-sectional view of the electric power assist unit, and is a diagram showing the state in which the gear position is switched to the third position.

### DESCRIPTION OF EMBODIMENTS

Hereinafter, an electric power assist unit for a bicycle (hereinafter, simply referred to as an "electric power assist unit") 100 and an electric power-assisted bicycle (hereinafter, simply referred to as a "bicycle") 1 including the electric power assist unit 100 according to an embodiment of the present invention will be described with reference to the drawings.

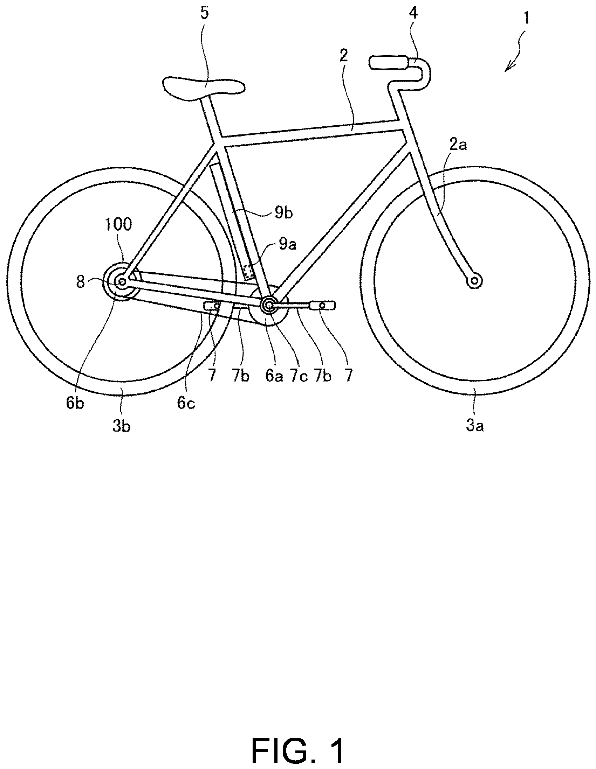

First, an overall configuration of the bicycle 1 will be described with reference to FIG. 1.

FIG. 1 is a side view illustrating an overview of the bicycle 1 including the electric power assist unit 100.

As shown in FIG. 1, the bicycle 1 includes a frame 2, a front wheel 3a, a rear wheel 3b as a drive wheel, a handlebar 4, a saddle 5, a drive sprocket 6a, a driven sprocket 6b, a chain 6c, a pair of pedals 7, a pair of crank arms 7b as crank portions, a crankshaft 7c, a support shaft 8, a controller 9a, an electric power storage unit 9b, and the electric power assist unit 100.

The bicycle 1 is ridden by a rider who sits astride the saddle 5 and pedals the crank arms 7b via the pedals 7. The bicycle 1 drives the rear wheel 3b by a pedaling force (drive torque) transmitted from the crank arms 7b to the crankshaft 7c and a drive force (assist torque) from the electric power assist unit 100 and having magnitude corresponding to the pedaling force.

The frame 2 is a so-called diamond frame that is substantially parallelogram-shaped when viewed from the side. The front wheel 3a and the rear wheel 3b are rotatably attached to the frame 2. The frame 2 has a front fork 2a that supports the front wheel 3a.

The front wheel 3a is steered left and right by the rider operating the handlebar 4 to pivot the front fork 2a.

The rear wheel 3b rotates around the support shaft 8. The driven sprocket 6b and the electric power assist unit 100 are attached to the rear wheel 3b.

The drive torque is transmitted to the driven sprocket 6b via the chain 6c wound between the driven sprocket 6b and the drive sprocket 6a to which the drive force from the crank arm 7b is input.

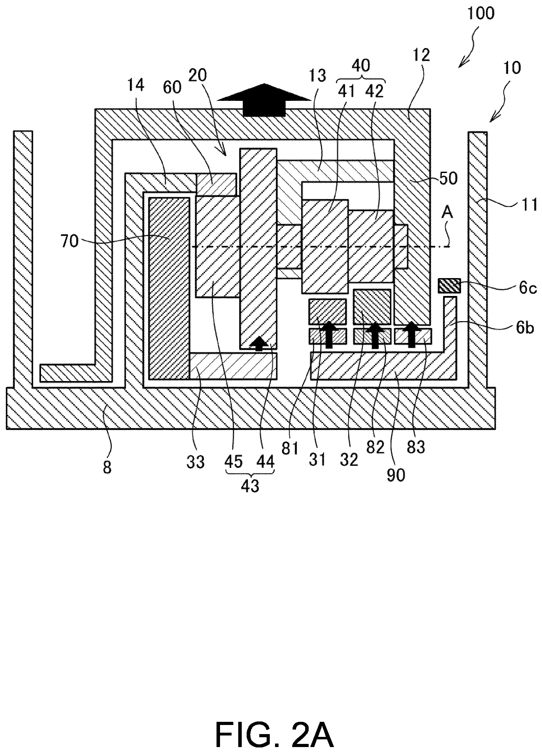

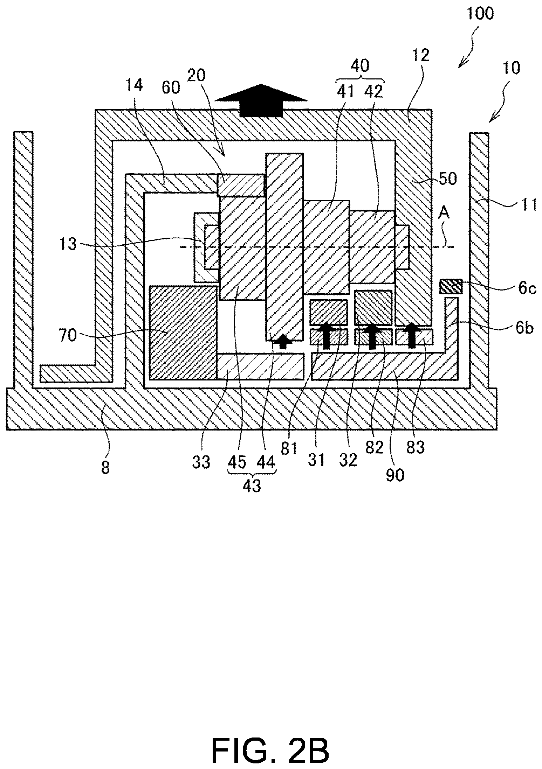

The electric power assist unit 100 generates the assist torque that assists the pedaling force from the rider. The electric power assist unit 100 will be described in detail later with reference to FIGS. 2A and 2B.

The pedals 7 are used by the rider to input the drive torque. The pedals 7 are connected to the crankshaft 7c via the crank arms 7b.

The support shaft 8 is attached to the frame 2. The support shaft 8 is non-rotatably provided with respect to the frame 2.

The controller 9a is implemented by a microcomputer including a CPU, a RAM, a ROM, an input and output interface, and the like. The controller 9a may also be implemented by a plurality of microcomputers. The controller 9a performs various processes by reading and executing programs stored in the ROM by the CPU. Specifically, the controller 9a calculates the assist torque based on an electrical signal corresponding to magnitude of a pedaling force received from a torque sensor (not shown) to be described later, and outputs a command signal to cause an electric motor 70 to generate the assist torque.

The electric power storage unit 9b is a chargeable and dischargeable secondary battery such as a nickel-metal hydride battery or a lithium-ion battery. The electric power storage unit 9b is provided to be removable from the frame 2.

Next, a configuration of the electric power assist unit 100 will be described with reference to FIGS. 2A and 2B.

FIG. 2A is a configuration diagram of the electric power assist unit 100. FIG. 2B is a configuration diagram of the electric power assist unit 100 according to a modification.

As shown in FIG. 2A, the electric power assist unit 100 includes a case unit 10, a planetary gear mechanism 20, the torque sensor (not shown), the electric motor 70, a plurality of (here, three) one-way clutches 81, 82, and 83, and a power input member 90. The electric power assist unit 100 can be switched between three gear positions, that is, a first position (lowest position), a second position, and a third position (highest position).

The case unit 10 includes a fixed case 11, a rotating case 12 as a case, a support member 13, and a motor support portion 14.

The fixed case 11 is fixed to the support shaft 8. The fixed case 11 does not rotate with respect to the support shaft 8.

The rotating case 12 is provided separately from the fixed case 11. The rotating case 12 rotatably supports the rear wheel 3b with respect to the support shaft 8. The rotating case 12 is provided integrally with a carrier 50 (to be described later) of the planetary gear mechanism 20. The rotating case 12 rotates together with the carrier 50 with respect to the support shaft 8. The rotating case 12 is connected to the carrier 50 and transmits at least one of the pedaling force or the drive force to the rear wheel 3b. The rotating case 12 rotates together with the rear wheel 3b about the support shaft 8 with respect to the fixed case 11. The rear wheel 3b is attached to an outer periphery of the rotating case 12 via spokes (not shown).

The support member 13 rotates together with the rotating case 12 (carrier 50). The support member 13 supports planetary gears 40 and 43 (to be described later) of the planetary gear mechanism 20 on the rotating case 12. The support member 13 supports a portion between the planetary gear 40 and the planetary gear 43 (to be described later) of the planetary gear mechanism 20 on the rotating case 12.

As described above, since the support member 13 supports the portion between the planetary gear 40 and the planetary gear 43 on the rotating case 12, the planetary gear 40 and the planetary gear 43 are supported on the rotating case 12 at both end portions. Therefore, the planetary gear 40 and the planetary gear 43 can be supported on the rotating case 12 in a more stable manner than a case in which the planetary gear 40 and the planetary gear 43 are supported on the rotating case 12 from an end portion in a cantilevered manner. Further, since a support portion of the support member 13 on a carrier 50 side is disposed on an inner peripheral surface side of the rotating case 12 supporting the support member 13 with respect to the planetary gear 43 formed to have a large diameter in order to decelerate the rotation of the electric motor 70, the length of the support member 13 in a radial direction of the planetary gear can be shortened, and the support member 13 can be miniaturized.

As shown in FIG. 2B, the planetary gears 40 and 43 may be provided side by side in order in an axial direction, and may be supported by the support member 13 at a position in which the support member 13 is furthest away from an inner peripheral surface of the rotating case 12. Therefore, support at two end portions may be possible, that is, the planetary gears 40 and 43 may be supported by the rotating case 12 and the support member 13 at two end portions.

The motor support portion 14 is formed as a part of the fixed case 11. The motor support portion 14 non-rotatably supports a stator 71 (to be described later) of the electric motor 70. The motor support portion 14 non-rotatably supports a ring gear 60 (to be described later) of the planetary gear mechanism 20.

The planetary gear mechanism 20 includes sun gears 31 and 32 as a plurality of sun gears, a sun gear 33 as a sun gear different from the plurality of sun gears, the planetary gear 40 as a first planetary gear, the planetary gear 43 as a second planetary gear, the carrier 50, and the ring gear 60.

Each of the sun gears 31 and 32 has a different number of teeth. The pedaling force from the rider is selectively input to the sun gears 31 and 32.

The sun gear 31 is provided on an outer periphery of the power input member 90. The sun gear 31 is provided to sandwich the sun gear 32 between the sun gear 31 and the inner peripheral surface of the rotating case 12. The sun gear 31 transmits power to a tooth flank 41 (to be described later) of the planetary gear 40 when the gear position is switched to the first position having the largest deceleration ratio.

The sun gear 32 is provided on the outer periphery of the power input member 90. The sun gear 32 is provided side by side with the sun gear 31 in the axial direction to face the inner peripheral surface of the rotating case 12. The sun gear 32 has an outer diameter larger than that of the sun gear 31. The sun gear 32 transmits power to a tooth flank 42 (to be described later) of the planetary gear 40 when the gear position is switched to the second position having a deceleration ratio smaller than that of the first position.

The sun gear 33 is provided separately from the sun gears 31 and 32. The sun gear 33 is provided on an outer periphery of the support shaft 8. A drive force from the electric motor 70 is input to the sun gear 33. The sun gear 33 transmits the assist torque from the electric motor 70 to the planetary gear 43.

The planetary gear 40 is supported by the carrier 50. The planetary gear 40 rotates around a rotation shaft A and revolves around an outer periphery of the sun gear 31. The planetary gear 40 includes the plurality of tooth flanks 41 and 42 that mesh with the sun gears 31 and 32, respectively, and are coaxially provided to rotate integrally. That is, the plurality of tooth flanks 41 and 42 are provided coaxially with each other to constitute the planetary gear 40.

The tooth flank 41 is provided to sandwich the tooth flank 42 between the tooth flank 41 and the inner peripheral surface of the rotating case 12. The tooth flank 41 meshes with the sun gear 31. When the gear position is switched to the first position, power from the sun gear 31 is transmitted to the tooth flank 41.

The tooth flank 42 is provided side by side with the tooth flank 41 in the axial direction to face the inner peripheral surface of the rotating case 12. The tooth flank 42 is provided coaxially with the tooth flank 41 to rotate together. The tooth flank 42 meshes with the sun gear 32. The tooth flank 42 is formed to have an outer diameter smaller than that of the tooth flank 41. When the gear position is switched to the second position, power from the sun gear 32 is transmitted to the tooth flank 42.

The planetary gear 43 is provided separately from the planetary gear 40 and is supported by the carrier 50. The planetary gear 43 is provided to sandwich a support portion of the support member 13 between the planetary gear 43 and the planetary gear 40. The planetary gear 43 rotates around the rotation shaft A and revolves around an outer periphery of the sun gear 33. The planetary gear 43 is provided coaxially with the planetary gear 40 to rotate and revolve together. The planetary gear 43 includes a tooth flank 44 that meshes with the sun gear 33 and a tooth flank 45 that meshes with the ring gear 60.

The tooth flank 44 is formed to have the largest outer diameter among the tooth flanks 41, 42, 44, and 45. The assist torque from the electric motor 70 is transmitted to the tooth flank 44 via the sun gear 33 regardless of the gear position.

The tooth flank 45 is provided side by side with the tooth flank 44 in the axial direction, and is provided at a position away from the inner peripheral surface of the rotating case 12 on a planetary gear 40 side with respect to the tooth flank 44. The tooth flank 45 is provided coaxially with the tooth flank 44 to rotate together. The tooth flank 45 is formed to have an outer diameter larger than that of the planetary gear 40 and smaller than that of the tooth flank 44. The tooth flank 45 meshes with an inner periphery of the ring gear 60.

As described above, since the outer diameter of the tooth flank 45 meshing with the inner periphery of the ring gear 60 is smaller than the outer diameter of the tooth flank 44, it is possible to restrain an increase in the size of the rotating case 12 in the radial direction, and it is possible to increase a deceleration ratio of the electric motor 70 and increase the assist torque. Alternatively, a configuration may be adopted in which the tooth flank 45 is not provided and the ring gear 60 meshes with an outer periphery of the tooth flank 44. In this case, since it is not necessary to provide the tooth flank 45, the length of the electric power assist unit 100 in the axial direction can be reduced.

The carrier 50 is provided integrally with the rotating case 12 and supports one end of the planetary gears 40 and 43 in the axial direction. A portion away from the end of the planetary gears 40 and 43 in the axial direction is supported by the support member 13. That is, the planetary gears 40 and 43 are supported by the carrier 50 and the support member 13 at two positions. The carrier 50 supports the planetary gear 40 and the planetary gear 43 such that the planetary gear 40 and the planetary gear 43 can rotate about the rotation shaft A. The carrier 50 rotates together with the rotating case 12 about the support shaft 8 as the planetary gears 40 and 43 revolve.

In this way, the pedaling force from the rider is transmitted from the inner periphery to the outer periphery in the order of the sun gears 31 and 32, the planetary gear 40, the carrier 50, the rotating case 12, and the rear wheel 3b. Accordingly, an input path and an output path of the drive force can be set to simple structures as compared with a case in which the drive force is input from the ring gear outside the carrier serving as a transmission mechanism and the drive force is output to the rotating case outside the ring gear. Therefore, the electric power assist unit 100 can be miniaturized.

Further, by using the sun gear 33 as a drive force input gear to which the drive force is input from the electric motor 70, the drive force from the electric motor 70 is transmitted from the inner periphery to the outer periphery in the order of the sun gear 33, the planetary gear 43, the carrier 50, the rotating case 12, and the rear wheel 3b, similarly to the input of the pedaling force. Accordingly, the input path and the output path of the drive force can be set to simple structures as compared with the case in which the drive force is input from the ring gear outside the carrier serving as the transmission mechanism and the drive force is output to the rotating case outside the ring gear. Therefore, the electric power assist unit 100 can be miniaturized.

Further, the electric power assist unit 100 is provided with the single ring gear 60 that is non-rotatably provided and is meshed with the planetary gear 43 revolving and rotating integrally with the planetary gear 40. Thus, it is not necessary to provide a ring gear in each of a transmission mechanism portion that transmits the pedaling force from the rider and a deceleration mechanism portion that transmits the drive force from the electric motor 70. Therefore, the electric power assist unit 100 can be miniaturized.

The ring gear 60 is non-rotatably supported on the support shaft 8. The ring gear 60 meshes with only the tooth flank 45 of the planetary gear 43, but the planetary gears 40 and 43 are coaxially provided and rotate and revolve together, and thus the ring gear 60 is a common ring gear for the planetary gears 40 and 43.

In this way, the ring gear 60 is shared by an input path of the pedaling force from the rider and the input path of the drive force from the electric motor 70, and thus the number of components can be reduced.

The electric motor 70 assists the drive force in accordance with the pedaling force from the rider. The electric motor 70 is driven by a command from the controller 9a. The electric motor 70 generates the assist torque by electric power supplied from the electric power storage unit 9b.

The torque sensor detects the drive torque generated when the rider pedals the crank arms 7b via the pedals 7 and transmitted to the crankshaft 7c. The torque sensor is, for example, a non-contact torque sensor that detects a torque based on torsion of the crankshaft 7c measured magnetically.

The one-way clutch 81 is provided between an inner periphery of the sun gear 31 and the outer periphery of the power input member 90. The one-way clutch 81 switches between a state in which the pedaling force from the rider is transmitted to the sun gear 31 via the power input member 90 and a state in which the rotation of the sun gear 31 is not transmitted to the pedals 7. Accordingly, the one-way clutch 81 transmits the pedaling force from the rider to the sun gear 31 via the power input member 90. The one-way clutch 81 does not transmit the rotation of the sun gear 31 to the pedals 7.

The one-way clutch 82 is provided between an inner periphery of the sun gear 32 and the outer periphery of the power input member 90. The one-way clutch 82 switches between a state in which the pedaling force from the rider is transmitted to the sun gear 32 via the power input member 90 and a state in which the rotation of the sun gear 32 is not transmitted to the pedals 7. Accordingly, the one-way clutch 82 transmits the pedaling force from the rider to the sun gear 32 via the power input member 90. The one-way clutch 82 does not transmit the rotation of the sun gear 32 to the pedals 7.

The one-way clutch 83 is provided between an inner periphery of the rotating case 12 and the outer periphery of the power input member 90. The one-way clutch 83 switches between a state in which the pedaling force from the rider is transmitted to the rotating case 12 via the power input member 90 and a state in which the rotation of the rotating case 12 is not transmitted to the pedals 7. The one-way clutch 83 transmits the pedaling force from the rider to the rotating case 12 via the power input member 90.

As described above, since the plurality of one-way clutches 81, 82, and 83 are provided, even when the pedaling force is input from two adjacent one-way clutches among the one-way clutches 81, 82, and 82 at the time of gear shift, the pedaling force is not transmitted to one of the sun gears 31 and 32 and the rotating case 12, which has a higher rotation speed. Thus, the gear position can be smoothly changed.

The power input member 90 is provided on an inner periphery of the driven sprocket 6b to which the pedaling force is input. The power input member 90 is a cylindrical member rotatably provided on the outer periphery of the support shaft 8. The power input member 90 selectively transmits the drive torque input from the driven sprocket 6b to one of the sun gears 31 and 32 and the rotating case 12 via corresponding one of the one-way clutches 81, 82, and 83.

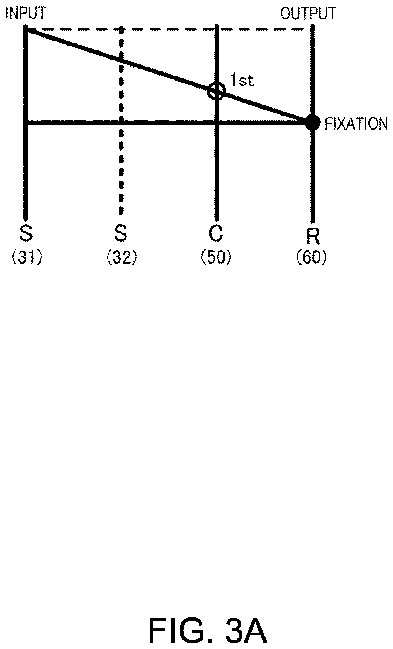

Next, the gear positions of the electric power assist unit 100 will be described with reference to FIGS. 3A to 3C.

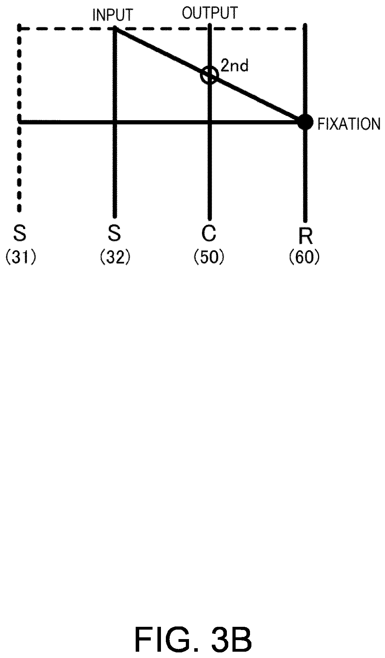

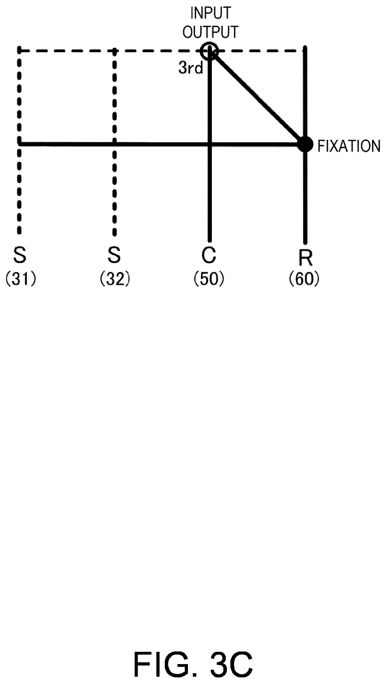

FIG. 3A is an alignment chart of the electric power assist unit 100, and is a diagram showing a state in which the gear position is switched to the first position. FIG. 3B is an alignment chart of the electric power assist unit 100, and is a diagram showing a state in which the gear position is switched to the second position. FIG. 3C is an alignment chart of the electric power assist unit 100, and is a diagram showing a state in which the gear position is switched to the third position.

As shown in FIG. 3A, in the state in which the gear position is switched to the first position as the lowest position, the drive torque input from the driven sprocket 6b via the power input member 90 is transmitted to the sun gear 31 via the one-way clutch 81. Since the sun gear 31 meshes with the tooth flank 41 of the planetary gear 40, the drive force is transmitted from the sun gear 31 to the planetary gear 40, and the revolution of the planetary gear 40 is transmitted from the carrier 50 to the rotating case 12. Accordingly, the pedaling force from the rider is decelerated and is transmitted to the rear wheel 3b.

At this time, the outer diameter of the sun gear 31 is smaller than that of the sun gear 32, and the outer diameter of the tooth flank 41 of the planetary gear 40 is larger than that of the tooth flank 42 (the number of teeth formed on the tooth flank 41 is larger than the number of teeth formed on the tooth flank 42), and thus the pedaling force from the rider is transmitted to the rear wheel 3b at the largest deceleration ratio.

As shown in FIG. 3B, in the state in which the gear position is switched to the second position, the drive torque input from the driven sprocket 6b via the power input member 90 is transmitted to the sun gear 32 via the one-way clutch 82. Since the sun gear 32 meshes with the tooth flank 42 of the planetary gear 40, the drive force is transmitted from the sun gear 32 to the planetary gear 40, and the revolution of the planetary gear 40 is transmitted from the carrier 50 to the rotating case 12. Accordingly, the pedaling force from the rider is decelerated and is transmitted to the rear wheel 3b.

At this time, the outer diameter of the sun gear 32 is larger than that of the sun gear 31, and the outer diameter of the tooth flank 42 of the planetary gear 40 is smaller than that of the tooth flank 41 (the number of teeth formed on the tooth flank 42 is smaller than the number of teeth formed on the tooth flank 41), and thus the pedaling force from the rider is transmitted to the rear wheel 3b at a smaller deceleration ratio as compared with the case in which the gear position is the first position.

As shown in FIG. 3C, in the state in which the gear position is switched to the third position as the highest position, the drive torque input from the driven sprocket 6b via the power input member 90 is directly transmitted to the rotating case 12 via the one-way clutch 83. At this time, the driven sprocket 6b, the power input member 90, and the rotating case 12 rotate integrally. Accordingly, the pedaling force from the rider is not decelerated and directly transmitted to the rear wheel 3b.

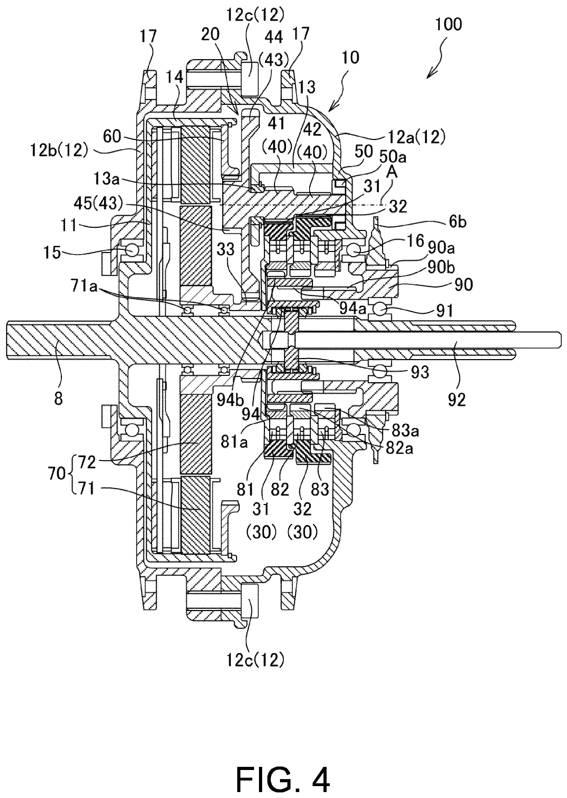

Next, the specific configuration of the electric power assist unit 100 will be described with reference to FIGS. 4 to 6. The configuration of the electric power assist unit 100 has already been described with reference to FIGS. 2A and 2B, and thus the redundant description will be omitted as appropriate.

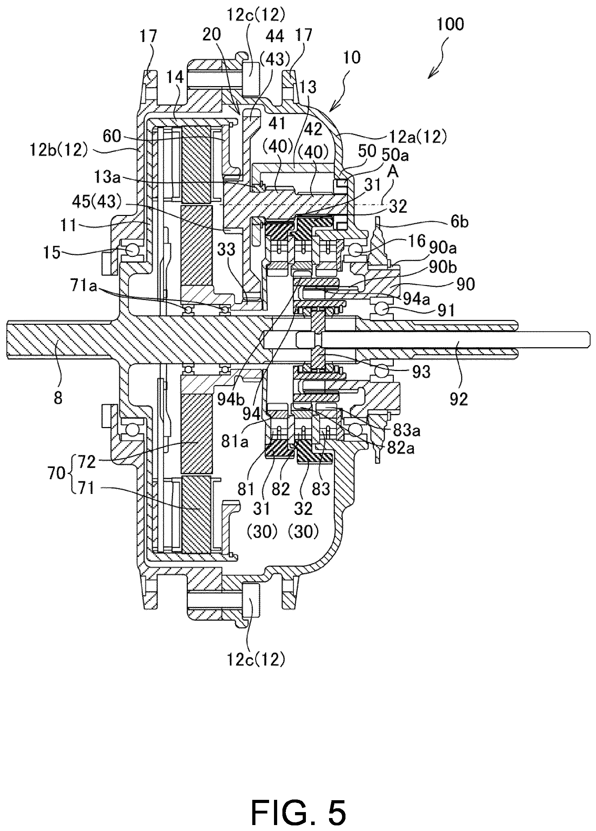

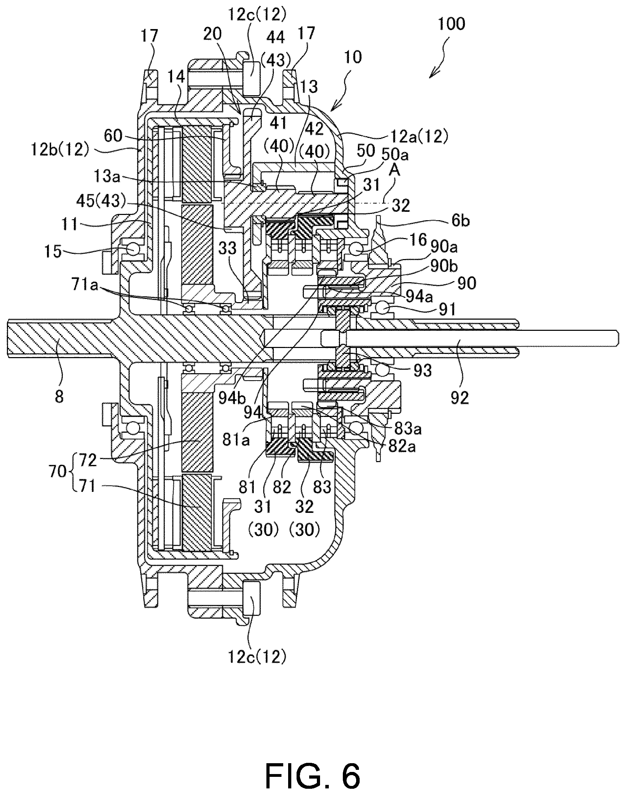

FIG. 4 is a cross-sectional view of the electric power assist unit 100, and is a diagram showing the state in which the gear position is switched to the first position. FIG. 5 is a cross-sectional view of the electric power assist unit 100, and is a diagram showing the state in which the gear position is switched to the second position. FIG. 6 is a cross-sectional view of the electric power assist unit 100, and is a diagram showing the state in which the gear position is switched to the third position.

The electric power assist unit 100 includes the case unit 10, the planetary gear mechanism 20, the torque sensor, the electric motor 70, the plurality of one-way clutches 81, 82, and 83, the power input member 90, a gear shift shaft 92, and a sliding engagement member 94.

The case unit 10 includes the fixed case 11, the rotating case 12, the support member 13, and the motor support portion 14.

The fixed case 11 is formed in a substantially cup shape with a surface being open almost entirely on one side in the axial direction. The fixed case 11 is attached to the support shaft 8 and rotates integrally with the support shaft 8. The fixed case 11 accommodates the electric motor 70, the sun gear 33, and the ring gear 60.

The rotating case 12 has a first case 12a, a second case 12b, and a plurality of bolts 12c as fastening members.

The first case 12a is formed in a substantially cup shape with a surface being open almost entirely on the other side in the axial direction. The first case 12a is rotatably supported on the outer periphery of the power input member 90 via a bearing 16. The first case 12a accommodates the sun gears 31 and 32, the planetary gears 40 and 43, and the one-way clutches 81, 82, and 83. The first case 12a is provided such that an opening faces the fixed case 11. One flange 17 to which the spoke is connected is provided on an outer periphery of the first case 12a to protrude toward the outer periphery.

The second case 12b is formed in a substantially cup shape with a surface being open almost entirely on one side in the axial direction. The second case 12b is provided at an interval from an outer surface of the fixed case 11 so as to cover the outside of the fixed case 11. The second case 12b is rotatably supported on an outer periphery of the fixed case 11 via a bearing 15. The second case 12b is provided such that an opening faces the first case 12a, and is fastened to the first case 12a by the bolts 12c. The opening of the second case 12b opens in the same direction as an opening of the fixed case 11. The other flange 17 to which the spoke is connected is provided on an outer periphery of the second case 12b to protrude toward the outer periphery.

Accordingly, in a state in which the sun gears 31 and 32, the planetary gears 40 and 43, and the one-way clutches 81, 82, and 83 are accommodated in the first case 12a, and the electric motor 70, the sun gear 33, and the ring gear 60 are accommodated in the fixed case 11, the electric power assist unit 100 can be assembled by simply facing the openings of the first case 12a and the fixed case 11, attaching the second case 12b, and fastening the second case 12b and the first case 12a with the bolts 12c.

The support member 13 is formed in a substantially cup shape in which a surface is open almost entirely on one side in the axial direction, and a rotation center portion on a surface on the other side and the vicinity thereof are opened such that the support shaft 8 can be inserted. The support member 13 is formed to have an outer diameter smaller than that of the first case 12a. The support member 13 is attached to an inner wall surface of the first case 12a extending in the radial direction such that the open surface on one side faces the inner wall surface of the first case 12a extending in the radial direction. The support member 13 supports the planetary gears 40 and 43 via a bearing 13a such that the planetary gears 40 and 43 are rotatable about the rotation shaft A. The support member 13 rotates about the support shaft 8 together with the planetary gears 40 and 43 as the planetary gears 40 and 43 revolve.

The carrier 50 is provided integrally with the rotating case 12. In other words, the carrier 50 constitutes a part of the rotating case 12. The carrier 50 supports the planetary gears 40 and 43 via a bearing 50a such that the planetary gears 40 and 43 are rotatable about the rotation shaft A. The carrier 50 rotates about the support shaft 8 together with the planetary gears 40 and 43 as the planetary gears 40 and 43 revolve.

The electric motor 70 has the stator 71 and a rotor 72. The stator 71 is non-rotatably supported by the motor support portion 14. The rotor 72 is provided on an inner periphery side of the stator 71 and rotates with respect to the stator 71. The sun gear 33 is attached to the rotor 72. The rotor 72 rotates together with the sun gear 33.

The power input member 90 is rotatably supported on the outer periphery of the support shaft 8 via a bearing 91. The power input member 90 has a spline 90a as a first engagement portion and a spline 90b as a second engagement portion.

The spline 90a is formed on an outer periphery of a large-diameter portion formed to have a large diameter, and is engaged with a spline formed on an inner peripheral surface of the driven sprocket 6b.

The spline 90b is formed on an outer periphery of a small-diameter portion that has a diameter smaller than that of the spline 90a and is formed at a position offset in the axial direction, and is engaged with a spline 94a of the sliding engagement member 94. The spline 90b is always engaged with the spline 94a regardless of the position of the sliding engagement member 94 in the axial direction.

The gear shift shaft 92 is slideable in the axial direction inside the support shaft 8, and switches to cause the sliding engagement member 94 to rotate together with one of inner races 81a, 82a, and 83a according to an engagement position with the sliding engagement member 94 in the axial direction.

Accordingly, the gear position can be changed by simply changing the position of the gear shift shaft 92 in the axial direction based on an operation of the rider. Therefore, for example, the rider can change the gear position by operating a lever at hand or the like in the same way as gear shift of a normal bicycle.

A connection member 93 is provided perpendicular to a central axis of the gear shift shaft 92 and is engaged with the gear shift shaft 92 in the axial direction. The connection member 93 connects the gear shift shaft 92 and the sliding engagement member 94, and moves the gear shift shaft 92 and the sliding engagement member 94 together in the axial direction.

The sliding engagement member 94 is provided to be slideable in the axial direction with respect to the power input member 90, and is engaged with the power input member 90 to rotate together with the power input member 90. The sliding engagement member 94 is engaged to rotate together with one of the inner races 81a, 82a, and 83a of the plurality of one-way clutches 81, 82, and 83.

Specifically, the sliding engagement member 94 is a member including two coaxial cylindrical portions. An inner peripheral surface of a small-diameter cylindrical portion located on an inner periphery side of the sliding engagement member 94 is engaged with the connection member 93. The spline 94a as a third engagement portion is formed on an inner peripheral surface of a large-diameter cylindrical portion located on an outer periphery side of the sliding engagement member 94, and a spline 94b as a fourth engagement portion is formed on an outer peripheral surface of the large-diameter cylindrical portion.

The spline 94a is engaged with the spline 90b of the power input member 90. The spline 94b is selectively engaged with one of the inner races 81a, 82a, and 83a of the one-way clutches 81, 82, and 83.

Accordingly, the pedaling force input from the power input member 90 can be transmitted to one of the one-way clutches 81, 82, and 83 by simply sliding the sliding engagement member 94 in the axial direction.

Next, the gear positions of the electric power assist unit 100 will be described.

In the state shown in FIG. 4, the gear position of the electric power assist unit 100 is shifted to the first position. At this time, the drive torque input from the driven sprocket 6b via the power input member 90 is transmitted to the sun gear 31 via the sliding engagement member 94 and the one-way clutch 81. Since the sun gear 31 meshes with the tooth flank 41 of the planetary gear 40, the drive force is transmitted from the sun gear 31 to the planetary gear 40, and the revolution of the planetary gear 40 is transmitted from the carrier 50 to the rotating case 12. Accordingly, the rotation of the driven sprocket 6b by the pedaling force from the rider is decelerated and is transmitted to the rear wheel 3b. When the gear shift shaft 92 slides from this state in a direction of retracting from the case unit 10 based on an operation of the rider, the state is switched to the state shown in FIG. 5.

In the state shown in FIG. 5, the gear position of the electric power assist unit 100 is shifted to the second position. At this time, the drive torque input from the driven sprocket 6b via the power input member 90 is transmitted to the sun gear 32 via the sliding engagement member 94 and the one-way clutch 82. Since the sun gear 32 meshes with the tooth flank 42 of the planetary gear 40, the drive force is transmitted from the sun gear 32 to the planetary gear 40, and the revolution of the planetary gear 40 is transmitted from the carrier 50 to the rotating case 12. Accordingly, the rotation of the driven sprocket 6b by the pedaling force from the rider is decelerated and is transmitted to the rear wheel 3b. When the gear shift shaft 92 further slides from this state in the direction of retracting from the case unit 10 based on the operation of the rider, the state is switched to the state shown in FIG. 6.

In the state shown in FIG. 6, the gear position of the electric power assist unit 100 is shifted to the third position. At this time, the drive torque input from the driven sprocket 6b via the power input member 90 is directly transmitted to the rotating case 12 via the sliding engagement member 94 and the one-way clutch 83. At this time, the driven sprocket 6b, the power input member 90, and the rotating case 12 rotate integrally. Accordingly, the rotation of the driven sprocket 6b by the pedaling force from the rider is not decelerated and is directly transmitted to the rear wheel 3b.

In this way, the electric power assist unit 100 is configured such that the input and the output have same speeds in a third speed, and each of a first speed and a second speed has a gear ratio on a deceleration side. Accordingly, in the state in which the gear position is switched to the third speed as the highest position, which is most frequently used when the assist torque is transmitted to the rear wheel 3b as the drive wheel by the electric motor 70, the pedaling force from the rider is directly transmitted to the rotating case 12 without passing through the components of the planetary gear mechanism 20. Accordingly, it is possible to avoid a load applied to the components of the planetary gear mechanism 20 in the electric power assist unit 100 and improve the durability of the electric power assist unit 100.

The configuration and effects of the present embodiment described above will be collectively described.

(1) (7) The electric power assist unit 100 for the bicycle 1 includes the plurality of sun gears 31 and 32 each having a different number of teeth and selectively receiving the pedaling force from the rider; the planetary gear 40 having the tooth flanks 41 and 42 respectively meshed with the plurality of sun gears 31 and 32; the electric motor 70 that generates the drive force for assisting the pedaling force; the sun gear 33 that is different from the plurality of sun gears 31 and 32 and receives the drive force from the electric motor 70; the planetary gear 43 that revolves and rotates integrally with the planetary gear 40 and is meshed with the sun gear 33 different from the plurality of sun gears 31 and 32; the ring gear 60 that is non-rotatably provided in and is meshed with the planetary gear 43; the carrier 50 that supports the planetary gear 40 and the planetary gear 43; and the rotating case 12 that is connected to the carrier 50 and transmits at least one of the pedaling force or the drive force to the rear wheel 3b.

With this configuration, the electric power assist unit 100 is provided with the single ring gear 60 that is non-rotatably provided and is meshed with the planetary gear 43 revolving and rotating integrally with the planetary gear 40. Thus, it is not necessary to provide a ring gear in each of the transmission mechanism portion that transmits the pedaling force from the rider and the deceleration mechanism portion that transmits the drive force from the electric motor 70. Therefore, the electric power assist unit 100 can be miniaturized.

Further, the pedaling force from the rider is transmitted from the inner periphery to the outer periphery in the order of the sun gears 31 and 32, the planetary gear 40, the carrier 50, the rotating case 12, and the rear wheel 3b. Accordingly, the input path and the output path of the drive force can be set to simple structures as compared with the case in which the drive force is input from the ring gear outside the carrier serving as the transmission mechanism and the drive force is output to the rotating case outside the ring gear. Therefore, the electric power assist unit 100 can be miniaturized.

(2) Further, the rotating case 12 rotatably supports the rear wheel 3b with respect to the support shaft 8, and rotates together with the carrier 50 with respect to the support shaft 8.

With this configuration, the pedaling force from the rider is input to the sun gears 31 and 32 or the rotating case 12 of the electric power assist unit 100 via the drive sprocket 6a and the driven sprocket 6b. The drive force transmitted from the drive sprocket 6a to the driven sprocket 6b is accelerated when the number of teeth of the driven sprocket 6b is smaller than the number of teeth of the drive sprocket 6a, and thus the torque input to the sun gears 31 and 32 or the rotating case 12 is reduced accordingly. Therefore, it is possible to reduce resistance of each component of the electric power assist unit 100, and to prevent the electric power assist unit 100 from becoming large.

(3) Further, the electric power assist unit 100 further includes the plurality of one-way clutches 81 and 82 respectively performing switching between the state in which the pedaling force from the rider is transmitted to the plurality of sun gears 31 and 32 and the state in which the rotation of the plurality of sun gears 31 and 32 is not transmitted to the pedals 7.

With this configuration, since the plurality of one-way clutches 81, 82 are provided, even when the pedaling force is input from both the one-way clutches 81, 82 at the time of gear shift, the pedaling force is not transmitted to one of the sun gears 31 and 32, which has a higher rotation speed. Thus, the gear position can be smoothly changed.

(4) Further, the electric power assist unit 100 further includes the power input member 90 provided on the inner periphery of the driven sprocket 6b that receives the pedaling force; and the sliding engagement member 94 that is provided to be slideable in the axial direction with respect to the power input member 90, is engaged with the power input member 90 to rotate together with the power input member 90, and is engaged to rotate together with one of the inner races 81a, 82a, and 83a of the plurality of one-way clutches 81, 82, and 83.

With this configuration, the pedaling force input from the power input member 90 can be transmitted to one of the one-way clutches 81, 82, and 83 by simply sliding the sliding engagement member 94 in the axial direction.

(5) Further, the electric power assist unit 100 further includes the gear shift shaft 92 that is slideable in the axial direction inside the support shaft 8 and performs switching to cause the sliding engagement member 94 to rotate together with one of the inner races 81a, 82a, and 83a according to the engagement position with the sliding engagement member 94 in the axial direction.

With this configuration, the gear position can be changed by simply changing the position of the gear shift shaft 92 in the axial direction based on the operation of the rider. Therefore, for example, the rider can change the gear position by operating the lever at hand or the like in the same way as the gear shift of the normal bicycle.

(6) Further, the electric power assist unit 100 further includes the support member 13 that supports the portion between the planetary gear 40 and the planetary gear 43 on the rotating case 12.

With this configuration, since the support member 13 supports the portion between the planetary gear 40 and the planetary gear 43 on the rotating case 12, the planetary gear 40 and the planetary gear 43 are supported on the rotating case 12 in a cantilevered manner. Therefore, the length of each of the planetary gear 40 and the planetary gear 43 in the axial direction can be reduced as compared with the case in which the planetary gear 40 and the planetary gear 43 are supported at two end portions.

Although the embodiment of the present invention has been described above, the above embodiment is merely an application example of the present invention and is not intended to limit the technical scope of the present invention to the specific configuration of the above embodiment.

For example, in the above embodiment, the electric power assist unit 100 is attached to the rear wheel 3b together with the driven sprocket 6b. However, the electric power assist unit 100 may be attached to the crankshaft 7c together with the drive sprocket 6a. In this case, the rider may pedal the crank arms 7b via the pedals 7, and the pedaling force (drive torque) transmitted from the crank arms 7b to the crankshaft 7c may be input to the sun gears 31 and 32 or the rotating case 12. In addition, the output of the electric power assist unit 100 may be transmitted to the drive sprocket 6a via the rotating case 12, and then transmitted to the driven sprocket 6b via the chain 6c wound between the drive sprocket 6a and the driven sprocket 6b, thereby rotating the rear wheel 3b.

Further, in the above embodiment, the rotor 72 is a so-called inner rotor provided on an inner periphery of the stator 71. Alternatively, the stator may be provided on the inner periphery side, and the rotor may be a so-called outer rotor that rotates on an outer periphery of the stator.

In addition, in the above embodiment, the plurality of one-way clutches 81 and 82 respectively switching between the state in which the pedaling force from the rider is transmitted to the plurality of sun gears 31 and 32 and the state in which the rotation of the sun gears 31 and 32 is not transmitted to the pedals 7 are included. Alternatively, a plurality of one-way clutches switching between the state in which the pedaling force from the rider is transmitted to the plurality of sun gears 31 and 32 and the state in which the rotation of the sun gears 31 and 32 is not transmitted to the pedals 7 may simply be provided.

In addition, in the above embodiment, the power input member 90 provided on the inner periphery of the driven sprocket 6b to which the pedaling force is input, and the sliding engagement member 94 that is provided to be slideable in the axial direction with respect to the power input member 90, is engaged with the power input member 90 to rotate together with the power input member 90, and is engaged to rotate together with one of the inner races 81a, 82a, and 83a of the plurality of one-way clutches 81, 82, and 83, are provided. Alternatively, a rotating engagement member may be provided that is engaged to rotate with respect to the shaft so as to rotate together with one of the inner races 81a, 82a, and 83a of the plurality of one-way clutches 81, 82, and 83.

In addition, in the above embodiment, the support member 13 is further provided that supports the portion between the planetary gear 40 and the planetary gear 43 on the rotating case 12, the planetary gears 40 and 43 are provided side by side in order in the axial direction and are supported by the support member 13 at the position in which the support member 13 is furthest away from the inner peripheral surface of the rotating case 12 on the planetary gear 40 side. Alternatively, a cantilevered configuration may be adopted in which the support member 13 is not provided and the carrier 50 is supported at only a wall portion of the rotating case 12.

### DESCRIPTION OF REFERENCE SIGNS

100 electric power assist unit
1 bicycle
3b rear wheel (drive wheel)
6b driven sprocket
7 pedal
8 support shaft
12 rotating case (case)
13 support member
31, 32 sun gear
33 sun gear
40 planetary gear (first planetary gear)
41, 42 tooth flank
43 planetary gear (second planetary gear)
44, 45 tooth flank
50 carrier
60 ring gear
70 electric motor
81, 82, 83 one-way clutch
81a, 82a, 83a inner race
90 power input member
92 gear shift shaft
94 sliding engagement member

## Claims

1. An electric power assist unit for a bicycle, comprising:
a plurality of sun gears each having a different number of teeth and configured to selectively receive a pedaling force from a rider;
a first planetary gear having a tooth flank meshed with each of the plurality of sun gears;
an electric motor configured to generate a drive force for assisting the pedaling force;
a sun gear different from the plurality of sun gears and configured to receive the drive force from the electric motor;
a second planetary gear configured to revolve and rotate integrally with the first planetary gear and meshed with the sun gear different from the plurality of sun gears;
a ring gear non-rotatably provided in and meshed with the second planetary gear;
a carrier configured to support the first planetary gear and the second planetary gear; and
a case connected to the carrier and configured to transmit at least one of the pedaling force or the drive force to a drive wheel.

2. The electric power assist unit for a bicycle according to claim 1, wherein
the case rotatably supports the drive wheel with respect to a support shaft, and rotates together with the carrier with respect to the support shaft.

3. The electric power assist unit for a bicycle according to claim 2, further comprising:
a plurality of one-way clutches each configured to perform switching between a state in which the pedaling force from the rider is transmitted to corresponding one of the plurality of sun gears and a state in which rotation of corresponding one of the plurality of sun gears is not transmitted to a pedal.

4. The electric power assist unit for a bicycle according to claim 3, further comprising:
a power input member provided on an inner periphery of a driven sprocket configured to receive the pedaling force; and
a sliding engagement member provided to be slideable in an axial direction with respect to the power input member, engaged with the power input member to rotate together with the power input member, and engaged to rotate together with one of inner races of the plurality of one-way clutches.

5. The electric power assist unit for a bicycle according to claim 4, further comprising:
a gear shift shaft slideable in the axial direction inside the support shaft and configured to perform switching to cause the sliding engagement member to rotate together with one of the inner races according to an engagement position with the sliding engagement member in the axial direction.

6. The electric power assist unit for a bicycle according to any one of claims 1 to 5, further comprising:
a support member configured to support a portion between the first planetary gear and the second planetary gear on the case.

7. An electric power-assisted bicycle, comprising:
a plurality of sun gears each having a different number of teeth and configured to selectively receive a pedaling force from a rider;
a first planetary gear having a tooth flank meshed with each of the plurality of sun gears;
an electric motor configured to generate a drive force for assisting the pedaling force;
a sun gear different from the plurality of sun gears and configured to receive the drive force from the electric motor;
a second planetary gear configured to revolve and rotate integrally with the first planetary gear and meshed with the sun gear different from the plurality of sun gears;
a ring gear non-rotatably provided in and meshed with the second planetary gear;
a carrier configured to support the first planetary gear and the second planetary gear; and
a case connected to the carrier and configured to transmit at least one of the pedaling force or the drive force to a drive wheel.
